(19) Europäisches Patentamt
European Patent Office
Office européen des brevets

(11) Veröffentlichungsnummer: **0 237 749**
**B1**

(12) # EUROPÄISCHE PATENTSCHRIFT

(45) Veröffentlichungstag der Patentschrift: **06.06.90**

(51) Int. Cl.[5]: **C09D 167/08**

(21) Anmeldenummer: **87101506.1**

(22) Anmeldetag: **04.02.87**

(54) **Lufttrocknendes Überzugsmittel für Holz, Verfahren zu seiner Herstellung sowie seine Verwendung.**

(30) Priorität: **12.03.86 DE 3608153**

(43) Veröffentlichungstag der Anmeldung:
**23.09.87 Patentblatt 87/39**

(45) Bekanntmachung des Hinweises auf die Patenterteilung:
**06.06.90 Patentblatt 90/23**

(84) Benannte Vertragsstaaten:
**AT BE CH DE ES FR GB IT LI NL SE**

(56) Entgegenhaltungen:
**EP-A- 0 083 308**
**EP-A- 0 113 150**
**GB-A- 2 085 001**

(73) Patentinhaber: **BASF Lacke + Farben Aktiengesellschaft, Max-Winkelmann-Strasse 80, D-4400 Münster(DE)**

(72) Erfinder: **Sobitzkat, Horst, Dr., Schmüllingstrasse 20, D-4400 Münster(DE)**
Erfinder: **Peter-Pollmann, Rolf, Wielandstrasse 87, D-4400 Münster(DE)**

**EP 0 237 749 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Überzugsmittel, enthaltend als Bindemittel mittel- bis langölige Alkydharze auf der Basis trocknender Fettsäuren oder trocknender Öle, aliphatischer Di- und/oder Polycarbonsäuren und aliphatischer Di-und/oder Polyole, organisches Lösungsmittel, gegebenenfalls Pigmente, Füllstoffe, Hilfsstoffe und Trockenstoffe sowie ein Lichtschutzmittel. Derartige Überzugsmittel werden insbesondere als lasierende oder deckende Beschichtungen für Holz verwendet. Insbesondere wenn zum Schutz des Holzes lasierende Beschichtungen angewendet werden, besteht die Gefahr, daß energiereiche, kurzwellige Strahlung Abbaureaktionen im Lackfilm und auch in der darunterliegenden Holzoberfläche bewirkt, so daß es zu Zerstörungen und zum Ablösen des Lackfilms kommt.

Um derartigen Schäden vorzubeugen, sollte das Bindemittel möglichst wenig mit kurzwelliger UV-Strahlung in Wechselwirkung treten. Dies wird erreicht durch Einsatz rein aliphatischer Bauelemente, z.B. durch Ersatz der üblichen aromatischen Dicarbonsäuren, wie Isophthalsäure oder o-Phthalsäure durch die cycloaliphatische Hexahydrophthalsäure.

Ölmodifizierte Polyesterharze auf der Basis aliphatischer Bausteine sind bekannt, beispielsweise aus H. Wagner und H.F. Sarx, Lackkunstharze, 5. Auflage, Carl Hanser Verlag, München, 1971, Seite 99 - 100 und aus S.E. Berger und A.J. Kane, Paint Technol. 27 (1963), Nr. 1, Seite 12. Sie eignen sich jedoch wegen ihrer erhöhten UV-Durchlässigkeit nicht gut zum Schutz des Holzes in lasierenden Anstrichen.

Es ist also notwendig, das an sich witterungsbeständige Bindemittel mit chemischen Verbindungen zu versehen, die die schädliche UV-Strahlung im Lackfilm auf ungefährliche Weise umwandeln und somit nicht auf die Holzoberfläche gelangen lassen. Derartige Lichtschutzmittel sind als UV-Absorber seit langer Zeit bekannt. Eine Übersicht über gebräuchliche UV-Absorber gibt H. Kittel in "Lehrbuch der Lacke und Beschichtungen", Band III, Seite 365 - 375, Verlag W.A. Colomb, 1976. Der Einsatz vieler UV-Absorber scheitert unter anderem an der zu geringen Verträglichkeit bzw. Löslichkeit in mittel- oder langöligen, benzinlöslichen Alkydharzen.

Hydroxybenzophenone und Hydroxyphenylbenzotriazole, die zwei wichtige Gruppen von UV-Absorbern darstellen, weisen den Nachteil auf, die oxidative Trocknung zu verzögern, was auf Phenolreste zurückzuführen ist (siehe J.R. Kiefer, Jr, Ultraviolet Light Absorbers in Clear Coatings for Wood", J. Paint Technol., 39, Nr. 515 (1967), Seite 737).

Aus der EP-A-113 150 ist bekannt, Hydroxybenzophenone und/oder Hydroxyphenylbenzotriazole chemisch in mittel- und langölige Alkydharze einzubauen und damit verträglich zu machen. Es handelt sich hierbei um ein aufwendiges Verfahren zur Einarbeitung und Verträglichmachung des UV-Absorbers mit dem Bindemittel, da ein zusätzlicher Reaktionsschritt, die Reaktion der Hydroxylgruppen des UV-Absorbers mit funktionellen Gruppen des Alkydharz-Bindemittels, notwendig ist. Außerdem können noch vorhandene phenolische Gruppen im Hydroxybenzophenon- und Hydroxyphenylbenzotriazol-Derivat zu einer Behinderung der oxidativen Trocknung führen.

Aus der GB-A 2 085 001 sind Oxalsäurediamid-Derivate, wie z.B. 2-Ethoxy-4'-iso-dodecyloxalanilid mit isomeren Dodecylgruppen, bekannt als geeignete UV-Stabilisatoren für organische Polymerzusammensetzungen, insbesondere für Automobil-Decklacksysteme. Die beschriebenen Überzugsmittel werden bei Temperaturen oberhalb von 100°C eingebrannt. Die Anwendung der Oxalanilide zur Stabilisierung von lufttrocknenden Alkydharzsystemen, die zur Holzbeschichtung geeignet sein sollen, ist der GB-A 2 085 001 nicht zu entnehmen.

Die Aufgabe der vorliegenden Erfindung bestand darin, Überzugsmittel für lasierende und deckende Beschichtungen für Holz auf der Basis von lufttrocknenden Alkydharzen zur Verfügung zu stellen, die zu witterungs- und UV-Licht-stabilen Überzügen führen. Dabei sollten die Überzugsmittel leicht und ohne zusätzliche Reaktionsschritte herstellbar sein.

Die der Erfindung zugrundeliegende Aufgabe wird gelöst durch ein Überzugsmittel der eingangs genannten Art, das dadurch gekennzeichnet ist, daß es erhältlich ist aus

A) 50 bis 70 Gew.% natürlichen, linolsäurereichen, trocknenden Ölen und/oder deren Fettsäuren,

B) 15 bis 30 Gew.% gesättigten cycloaliphatischen Di- und/oder Polycarbonsäuren und

C) 15 bis 25 Gew.% aliphatischen Di- und/oder Polyolen mit 3–8 Hydroxylgruppen pro Molekül,

wobei die Summe von A), B) und C) 100 Gew.% beträgt, und das Überzugsmittel 0,5 bis 5 Gew.%, bezogen auf das Alkydharz, eines in aliphatischen Lösungsmitteln löslichen Oxalsäurediamid-Derivates der allgemeinen Formel

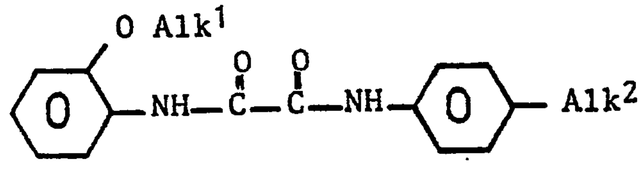

wobei $Alk^1$ eine Alkylgruppe mit 1 bis 3 Kohlenstoffatomen und $Alk^2$ eine Alkylgruppe mit mindestens 7 und höchstens 18 Kohlenstoffatomen bedeutet, enthält.

Aus einem technischen Informationsblatt der Fa. Schweizerische Teerindustrie AG vom 15.12.1982 mit dem Titel "Sanduvor 3206" ist ein UV-Absorber der Oxalanilidklasse, N-(2-Ethoxyphenyl)-N'-(4-isododecylphenyl)-oxalsäurediamid, bekannt. Dieser UV-Absorber kann sowohl in Klarlacken als auch in pigmentierten Systemen eingesetzt werden. Als Einsatzgebiete dieses Lichtschutzmittels werden "Base"- und "Top-coat" von 2-Schicht-Metallic-Systemen und Reparaturlacke beschrieben. Bezüglich der Einsetzbarkeit in Bindemittelsystemen werden Acrylatharze, Acryl-Melaminharze und 2-Komponenten-Polyurethanharze genannt. Ein Hinweis, den UV-Absorber in lufttrocknenden Alkydharzen einzusetzen, ist dem Informationsblatt nicht zu entnehmen.

Für das erfindungsgemäße Überzugsmittel geeignete Fettsäuren aus natürlichen, linolsäurereichen, trocknenden Ölen bzw. geeignete Öle sind Sojaölfettsäure, Sonnenblumenölfettsäure, Tallölfettsäure, Saflorölfettsäure und die entsprechenden Öle. Es können sowohl die Fettsäuren als auch deren Glyceride eingesetzt werden.

Bis zu 10 Gew.-% der Fettsäuren der Komponente A) können ersetzt sein durch gesättigte, aliphatische oder cycloaliphatische oder durch aromatische Monocarbonsäuren. Zu nennen sind dabei Pivalinsäure, Laurinsäure, Stearinsäure, Cyclopentancarbonsäure, Cyclohexancarbonsäure und Benzoesäure.

Beispiele für geeignete gesättigte cycloaliphatische Di- oder Polycarbonsäuren (Komponente B) sind Cyclopentan-1,2-dicarbonsäure, Cyclopentan-1,3-dicarbonsäure, Hexahydrophthalsäure, Cyclohexan-1,3-dicarbonsäure, Methylcyclohexan-1,2-dicarbonsäure, Endomethylencyclohexan-1,2-dicarbonsäure, Endoisopropylidencyclohexan-1,2-dicarbonsäure, Cyclohexan-1,2,4-tricarbonsäure und Cyclohexan-1,2,4,5-tetracarbonsäure. Bevorzugt ist hierbei die Cyclohexan-1,2-dicarbonsäure, also Hexahydrophthalsäure.

Beispiels für geeignete Di- oder Polyole (Komponente C) sind Ethylenglykol, Propylenglykol, 2,2-Dimethyl-1,3-propandiol, 1,6-Hexandiol, Trimethylolethan, Trimethylolpropan, Ditrimethylolpropan, Glycerin, Pentaerythrit, Dipentaerythrit, Tripentaerythrit, 1,4-Dimethylolcyclohexan, 1,3-Dimethylolcyclohexan, 1,2-Cyclohexandiol und 1,4-Cyclohexandiol.

Die in den erfindungsgemäßen Überzugsmitteln enthaltenden Oxalsäurediamid-Derivate der allgemeinen Formel

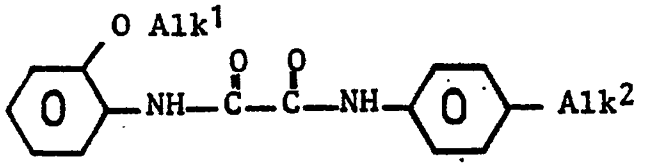

wobei Alk[1] eine Alkylgruppe mit 1 bis 3 Kohlenstoffatomen und Alk[2] eine Alkylgruppe mit mindestens 7 und höchstens 18 Kohlenstoffatomen bedeutet, sind in aliphatischen Lösungsmitteln löslich und weisen eine ausgezeichnete Verträglichkeit mit den aus den Komponenten A), B) und C) erhaltenen lufttrocknenden Alkydharzen auf. Die in den erfindungsgemäßen Überzugsmitteln enthaltenden Oxalsäurediamide haben eine hohe Lichtschutzwirkung, wobei Nachteile, wie Verzögerung der oxidativen Trocknung, nicht auftreten. Die erfindungsgemäßen Überzugsmittel haben daher sehr gute Trocknungs-, Witterungs- und Lichtschutzeigenschaften.

Bevorzugt wird als Oxalsäurediamid-Derivat N-(2-Ethoxyphenyl)-N'-(4-isododecylphenyl)-oxalsäurediamid eingesetzt.

Es ist möglich, bis zu 20 Gew.% der gesättigten cycloaliphatischen Di- oder Polycarbonsäuren durch gesättigte, offenkettige aliphatische Di-, Tri- und/oder Tetracarbonsäuren zu ersetzen. Zu nennen sind hierbei Adipinsäure, Acelainsäure, Sebacinsäure, 2, 2, 4-Trimethyladipinsäure, 1, 2, 3-Propantricarbonsäure, 1, 1, 3-Propantricarbonsäure und 1, 3, 3, 5-Pentantetracarbonsäure.

Die gesättigten cycloaliphatischen Di- oder Polycarbonsäuren der Komponente B können vollständig oder nur zum Teil ersetzt werden durch aliphatische Di- und/oder Polyisocyanate. Die dadurch entstehenden lufttrocknenden Urethanalkyde führen in Kombination mit den Oxalsäurediamid-Derivaten zu witterungsbeständigen, schnelltrocknenden Überzügen mit guter Lichtschutzwirkung. Geeignete aliphatische Di- und/oder Polyisocyanate sind Hexamethylen-1,6-diisocyanat, Isophorondiisocyanat und Tetramethylendiisocyanat. Die Isocyanate können zu Präpolymeren mit höherer Molmasse verknüpft sein. Zu nennen sind hierbei ein aus 3 Molekülen Hexamethylendiisocyanat gebildetes Biuret sowie die Trimeren des Hexamethylendiisocyanates.

Vorteilhaft ist es, wenn die trocknenden Fettsäuren bzw. die trocknenden Öle der Komponente A konjugierte Doppelbindungen aufweisen. Als Ölkomponente mit einer konjugierten Doppelbindung ist 9,11-Linolsäure, also die Rizinensäure, zu nennen.

Bis zu 10 Gew.-% der Komponente B) können durch aromatische Di- und/oder Polycarbonsäuren ersetzt werden. Geeignete organische Lösungsmittel sind Benzine, wie zum Beispiel Testbenzin, welches einen Aromatenanteil von 19 bis 20 Gew.-% aufweist, und beispielsweise Xylol.

Das erfindungsgemäße Überzugsmittel kann gegebenenfalls Pigmente, Füllstoffe, Hilfsstoffe und Trockenstoffe enthalten. Als geeignete Pigmente kommen sowohl natürliche als auch synthetische,

transparente und nicht transparente Pigmente in Frage. Dabei sind besonders Eisenoxide bevorzugt. Den günstigsten Mengenanteil an zugesetztem Pigment kann der Fachmann leicht ermitteln.

Beispiele für geeignete Trockenstoffe sind Metallsalze (cyclo) aliphatischer, natürlicher oder synthetischer Säuren, wie zum Beispiel Linolsäure, Naphthensäure oder 2-Ethylhexansäure, wobei als geeignete Metalle Kobalt, Mangan, Blei, Zirkon, Calcium und Zink zu nennen sind. Selbstverständlich können auch Mischungen von Sikkativen verwendet werden. Bezogen auf den Metallanteil werden die Trockenstoffe in einem Anteil von 0.001 bis etwa 3 Gew.%, bezogen auf den Bindemittelfestkörper, verwendet.

Die Erfindung betrifft auch Verfahren zur Herstellung der erfindungsgemäßen Überzugsmittel. Das erfindungsgemäße Verfahren ist dadurch gekennzeichnet, daß

A) 50 bis 70 Gew.% natürliche, linolsäurereiche, trocknende Öle und/oder deren Fettsäuren,

B) 15 bis 30 Gew.% gesättigte cycloaliphatische Di- und/oder Polycarbonsäuren und

C) 15 bis 25 Gew.% aliphatischen Di- und/oder Polyole mit 3-8 Hydroxylgruppen pro Molekül,

wobei die Summe von A), B) und C) 100 Gew.% beträgt, in der Schmelze oder im organischen Lösungsmittel bei Temperaturen von 200°C bis 260°C miteinander umgesetzt werden, wobei bei der Verwendung von natürlichen, linolsäurereichen Ölen diese zunächst gegebenenfalls unter Verwendung von Katalysatoren mit einem Teil der Komponente C) zu Mono- und Diesteralkoholen umgesetzt werden, das aus den Komponenten A), B) und C) gebildete Alkydharz in aliphatischem Lösungsmittel gegebenenfalls mit geringen Aromatenanteilen gelöst wird und der Bindemittellösung 0,5 bis 5 Gew.%, bezogen auf das Alkydharz, eines in aliphatischen Lösungsmitteln löslichen Oxalsäurediamid-Derivates der allgemeinen Formel

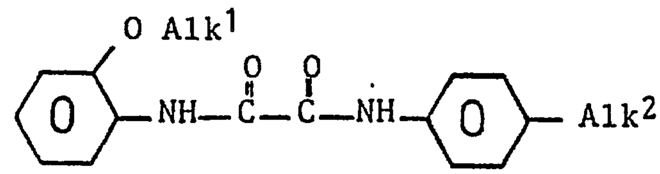

wobei $Alk^1$ eine Alkylgruppe mit 1 bis 3 Kohlenstoffatomen und $Alk^2$ eine Alkylgruppe mit mindestens 7 und höchstens 18 Kohlenstoffatomen bedeutet, sowie gegebenenfalls Pigmente, Füllstoffe, Hilfsstoffe und Trockenstoffe zugegeben werden.

Wird von den freien Fettsäuren ausgegangen, so erfolgt die Alkydharzbildung auf dem Wege einer dem Fachmann bekannten Polyveresterungsreaktion. Geht man von den Ölen aus, so werden diese zunächst in einer Alkoholysereaktion zu Esteralkoholen umgesetzt, welche dann mit den anderen Komponenten zu Ende verestert werden. Die Umesterungsreaktion kann durch Zusatz von Katalysatoren, wie zum Beispiel Calciumhydroxid, Bleioxid, Lithiumhydroxyd und Lithiumricinoleat, beschleunigt werden.

Die Erfindung betrifft auch ein Verfahren zur Herstellung der erfindungsgemäßen Überzugsmittel, das dadurch gekennzeichnet ist, daß

A) 50 bis 70 Gew.% natürliche, linolsäurereiche, trocknende Öle und/oder deren Fettsäuren, die gegebenenfalls vorhandenen gesättigten, cycloaliphatischen Di- und/oder Polycarbonsäuren der Komponente B, wobei als Komponente

B) 15 bis 30 Gew.% gesättigte, cycloaliphatische Di- und/oder Polycarbonsäuren und/oder gesättigte aliphatische Di- und/oder Polyisocyanate eingesetzt werden, und

C) 15 bis 25 Gew.% aliphatische Di- und/oder Polyole mit 3 – 8 Hydroxylgruppen pro Molekül,

wobei die Summe von A), B) und C) 100 Gew.% beträgt, in der Schmelze oder in organischem Lösungsmittel bei Temperaturen von 200°C bis 260°C miteinander umgesetzt werden, wobei bei der Verwendung von natürlichen, linolsäurereichen Ölen diese zunächst gegebenenfalls unter Verwendung von Katalysatoren mit einem Teil der Komponente C) zu Mono- und Diesteralkoholen umgesetzt werden, gegebenenfalls noch organisches Lösungsmittel zugefügt wird, anschließend bei 60 °C bis 140 °C die Umsetzung mit den aliphatischen Di- und/oder Polyisocyanaten der Komponente B) gegebenenfalls unter Verwendung eines Katalysators erfolgt und der Bindemittellösung 0,5 bis 5 Gew.%, bezogen auf das Alkydharz, eines in aliphatischen Lösungsmitteln löslichen Oxalsäurediamid-Derivates der allgemeinen Formel

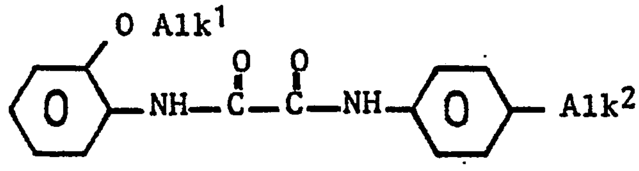

wobei $Alk^1$ eine Alkylgruppe mit 1 bis 3 Kohlenstoffatomen und $Alk^2$ eine Alkylgruppe mit mindestens 7 und höchstens 18 Kohlenstoffatomen bedeutet,sowie gegebenenfalls Pigmente, Füllstoffe, Hilfsstoffe und Trockenstoffe zugegeben werden.

Geeignete aliphatische Di- oder Polyisocyanate sind Hexamethylen-1,6-diisocyanat, Isophorondiisocyanat und Tetramethylendiisocyanat. Die Isocyanate können zu Präpolymeren mit höherer Molmasse verknüpft sein, wobei hierbei ein aus 3 Molekülen Hexamethylendiisocyanat gebildetes Biuret sowie Trimere des Hexamethylendiisocyanates zu nennen sind.

Als Katalysator für die Polyurethanbildung kommen beispielsweise tertiäre Amine, Zink- oder Zinnsalze, wie Zinkoctooat, Zinknaphthenat oder Dibutylzinndilaurat, in Frage.

Der Fettsäurerest der Komponente A) kann konjugierte Doppelbindungen enthalten. Als Beispiel sei die Ricinensäure genannt. Bevorzugt wird bei den erfindungsgemäßen Verfahren als Oxalsäurediamid-Derivat N-(2-Ethoxyphenyl)-N'-(4-isododecylphenyl)-oxalsäurediamid verwendet.

Bis zu 10 Gew.-% der Komponente B) können durch aromatische Di- und/oder Polycarbonsäuren ersetzt werden, ohne daß dies zu einer wesentlichen Verschlechterung der Eigenschaften des Überzugsmittels führt. Bis zu 20 Gew.-% der Komponente B) können ferner durch gesättigte, offenkettige, aliphatische Di-, Tri- und/oder Tetracarbonsäuren ersetzt sein.

Die erfindungsgemäßen Überzugsmittel eignen sich insbesondere als lasierende oder deckende Beschichtungsmittel für Holz. Sie weisen eine überraschend gute Witterungs- und Lichtbeständigkeit auf und schützen den Holzuntergrund vor schädlichen UV-Strahlen.

Nachfolgend wird die Erfindung anhand von Ausführungsbeispielen näher erläutert; Teile bedeuten Gewichtsteile, sofern nichts anderes angegeben wird.

<u>Vergleichsbeispiel 1:</u>

In einem Kolben, ausgestattet mit Wasserabscheider, Rührer und Thermometer, werden 320 Teile Sojaölfettsäure und 115 Teile Pentaerythrit bei 220°C unterInertgas erhitzt, bis eine Säurezahl von 3 mg KOH/g erreicht ist. Nach Kühlung werden 145 Teile Hexahydrophthalsäureanhydrid sowie 20 Teile Xylol zugegeben. Es wird aufgeheizt und die Kondensationsreaktion bei 230 °C bis zu einer Säurezahl von 15 bis 20 mg KOH/g geführt. Danach wird in Testbenzin gelöst und auf einen Feststoffgehalt von 58 Gew.% eingestellt.

<u>Beispiel 1:</u>

Die im Vergleichsbeispiel 1 hergestellte Alkydharzlösung wird mit 3 Gew.-% , bezogen auf die Alkydharzlösung, einer 80 %igen Lösung von N-(2-Ethoxyphenyl)-N'-(4-isododecylphenyl)-oxalsäurediamid in Xylol (im Handel erhältlich unter Sanduvor 3206) gemischt.

<u>Vergleichsbeispiel 2:</u>

Wie im Vergleichsbeispiel 1 werden 335 Teile Sonnenblumonölfettsäure und 90 Teile Pentaerythrit bei 220 °C erhitzt, bis eine Säurezahl von 3 mg KOH/g erreicht ist. Dann werden 44 Teile Hexahydrophthalsäureanhydrid und 20 Teile Xylol zugegeben, die Temperatur wird auf 230 °C gebracht und gehalten, bis eine Säurezahl von 5 mg KOH/g erreicht ist. Nach Kühlen werden 330 Teile Testbenzin zugegeben und anschließend bei 100 °C während einer Stunde 64 Teile Isophorondiisocyanat zugetropft. Nach weiteren 4 Stunden bei 100 °C ist die Reaktion beendet. Die erhaltene Urethanalkydharzlösung hat einen Feststoffgehalt von 60 Gew.-% und eine Säurezahl von 3 mg KOH/g.

<u>Beispiel 2:</u>

Die im Vergleichsbeispiel 2 hergestellte Urethanalkydharzlösung wird mit 3 Gew.-%, bezogen auf ihr Gewicht, einer 80 %igen Lösung von N-(2-Ethoxyphenyl)-N'-(4-isododecylphenyl)-oxalsäurediamid in Xylol (im Handel erhältlich unter Sanduvor 3206) gemischt.

<u>Vergleichsbeispiel 3</u>

Wie im Vergleichsbeispiel 1 beschrieben, werden 330 Teile Sojaölfettsäure, 115 Teile Pentaerythrit, 145 Teile Phthalsäureanhydrid und 2 Teile Xylol bei 230 °C so lange erhitzt, bis die Säurezahl von 15 bis 20 mg KOH/g erreicht ist. Danach wird gekühlt und mit Testbenzin ein Feststoffgehalt von 58 Gew.-% eingestellt.

<u>Vergleichsbeispiel 4</u>

Die im Vergleichsbeispiel 3 hergestellte Alkydharzlösung wird mit 3 Gew.-%, bezogen auf ihr Gewicht, einer 80 %igen Lösung von N-(2-Ethoxyphenyl)-N'-(4-isododecylphenyl)-oxalsäurediamid in Xylol (Handelsname Sanduvor 3206) vermischt.

Aus den in den obigen Beispielen und Vergleichsbeispielen beschriebenen Alkydharzlösungen lassen sich lasierende und deckende Überzugszusammensetzungen herstellen.

Lasierende Überzugsmittel sind beispielsweise herstellbar aus 62 Teilen der in den Beispielen bzw.

Vergleichsbeispielen hergestellten Alkydharzlösungen, 10 Teilen Wachs, 20 Teilen Extender und Schwebemittel, 3 Teilen Mattierungsmittel und 5 Teilen Trockenstoffe.

Gemäß dieser Rezeptur werden aus den Alkydharzlösungen der Beispiele 1 und 2 sowie der Vergleichsbeispiele 1, 2, 3 und 4 Überzugsmittel hergestellt (Überzugsmittel Vergleichsbeispiel 1 = A; Überzugsmittel Beispiel 1 = B; Überzugsmittel Vergleichsbeispiel 2 = C; Überzugsmittel Beispiel 2 = D; Überzugsmittel Vergleichsbeispiel 3 = E; Überzugsmittel Vergleichsbeispiel 4 = F), welche auf Holz gestrichen und bewittert werden. Die Bewitterungszeit entspricht 2 Jahren Wetterstation oder 1500 Stunden Wetterrad.

Im folgenden sind die Bewitterungsergebnisse in bezug auf Elastizität, UV-Schutz und Gesamteindruck dargestellt. Die Bewertungsskala reicht von 0 (= sehr gut) bis 5 (= ungenügend).

| Lasierendes Überzugsmittel | Elastizität | UV-Schutz | Gesamteindruck |
|---|---|---|---|
| A | 0–1 | 3 | 2 |
| B | 0 | 0 | 0 |
| C | 0–1 | 2–3 | 2 |
| D | 0 | 1 | 1 |
| E | 4 | 2 | 4 |
| F | 2–3 | 1 | 2–3 |

Deckende Überzugsmittel sind beispielsweise herstellbar aus 56 Teilen der in den (Vergleichs)beispielen hergestellten Alkydharzlösungen; 25 Teilen Titandioxid, 10 Teilen Extender, 2 Teilen Schwebemittel, 5 Teilen Trockenstoffe und 2 Teilen Verdünnungsmittel. Gemäß dieser Rezeptur werden aus den Alkydharzlösungen der Beispiele und Vergleichsbeispiele Überzugsmittel hergestellt (Überzugsmittel Vergleichsbeispiel 1 = G; Überzugsmittel Beispiel 1 = H; Überzugsmittel Vergleichsbeispiel 2 = I; Überzugsmittel Beispiel 2 = J; Überzugsmittel Vergleichsbeispiel 3 = K; Überzugsmittel Vergleichsbeispiel 4 = L), welche auf Holz gestrichen und auf dem Wetterrad 1500 Stunden bewittert werden.

Im folgenden sind die Bewitterungsergebnisse hinsichtlich des Glanzes und des Gesamteindruckes dargestellt:

| Deckendes Überzugsmittel | Glanz | Gesamteindruck |
|---|---|---|
| G | 2–3 | 2–3 |
| H | 1 | 0–1 |
| I | 2 | 2–3 |
| J | 1 | 0–1 |
| K | 4 | 3–4 |
| L | 2–3 | 3 |
| (0 = sehr gut, 5 ungenügend). | | |

## Patentansprüche

1. Überzugsmittel für Holz, enthaltend als Bindemittel mittel- bis langölige Alkydharze auf der Basis trocknender Fettsäuren oder trocknender Öle, aliphatischer Di- und/oder Polycarbonsäuren und aliphatischer Di- und/oder Polyole, organisches Lösungsmittel, gegebenenfalls Pigmente, Füllstoffe, Hilfsstoffe und Trockenstoffe sowie ein Lichtschutzmittel, dadurch gekennzeichnet, daß das lufttrocknende Alkydharzschutzmittel, erhältlich ist aus

A) 50 bis 70 Gew.% natürlichen, linolsäurereichen, trocknenden Ölen und/oder deren Fettsäuren,

B) 15 bis 30 Gew.% gesättigten cycloaliphatischen Di- und/oder Polycarbonsäuren und

C) 15 bis 25 Gew.% aliphatischen Di- und/oder Polyolen mit 3–8 Hydroxylgruppen pro Molekül,

wobei die Summe von A), B) und C) 100 Gew.% beträgt, und das Überzugsmittel 0,5 bis 5 Gew.%, bezogen auf das Alkydharz, eines in aliphatischen Lösungsmitteln löslichen Oxalsäurediamid-Derivates der allgemeinen Formel

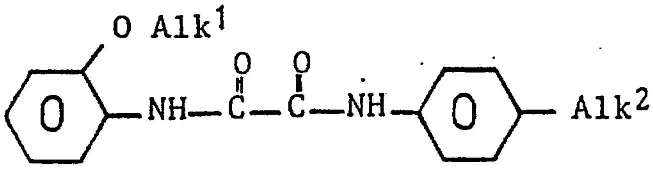

wobei $Alk^1$ eine Alkylgruppe mit 1 bis 3 Kohlenstoffatomen und $Alk^2$ eine Alkylgruppe mit mindestens 7 und höchstens 18 Kohlenstoffatomen bedeutet, enthält.

2. Überzugsmittel nach Anspruch 1, dadurch gekennzeichnet, daß die gesättigten cycloaliphatischen Di- und/oder Polycarbonsäuren der Komponente B) ganz oder teilweise durch aliphatische Di- und/oder Polyisocyanate ersetzt sind.

3. Überzugsmittel nach Anspruch 1 oder 2, dadurch gekennzeichnet, daß bis zu 10 Gew.-% der Komponente B) durch aromatische Di- und/oder Polycarbonsäuren ersetzt sind.

4. Überzugsmittel nach Anspruch 1, 2 oder 3, dadurch gekennzeichnet, daß bis zu 20 Gew.-% der Komponente B) durch gesättigte, offenkettige, aliphatische Di-, Tri- und/oder Tetracarbonsäuren ersetzt sind.

5. Überzugsmittel nach Anspruch 1, 2, 3 oder 4, dadurch gekennzeichnet, daß der Fettsäurerest der Komponente A) konjugierte Doppelbindungen enthält.

6. Überzugsmittel nach Anspruch 1, 2, 3, 4 oder 5, dadurch gekennzeichnet, daß das Oxalsäurediamid-Derivat N-(2-Ethoxyphenyl)-N'-(4-isododecylphenyl)-oxalsäurediamid ($Alk^1$ = $C_2H_5$; $Alk^2$ = i-$C_{12}H_{25}$) ist.

7. Verfahren zur Herstellung des Überzugsmittels nach Anspruch 1, dadurch gekennzeichnet, daß

A) 50 bis 70 Gew.% natürliche, linolsäurereiche, trocknende Öle und/oder deren Fettsäuren,

B) 15 bis 30 Gew.% gesättigte, cycloaliphatische Di- und/oder Polycarbonsäuren und

C) 15 bis 25 Gew.% aliphatische Di- und/oder Polyole, mit 3–8 Hydroxylgruppen pro Molekül,

wobei die Summe von A), B) und C) 100 Gew.% beträgt in der Schmelze oder in organischem Lösungsmittel bei Temperaturen von 200°C bis 260°C miteinander umgesetzt werden, wobei bei der Verwendung von natürlichen, linolsäurereichen Ölen diese zunächst gegebenenfalls unter Verwendung von Katalysatoren mit einem Teil der Komponente C) zu Mono- und Diesteralkoholen umgesetzt werden, da aus den Komponenten A), B) und C) gebildete Alkydharz in aliphatischem Lösungsmittel gegebenenfalls mit geringen Aromatenanteilen gelöst wird und der Bindemittellösung 0,5 bis 5 Gew.%, bezogen auf das Alkydharz, eines in aliphatischen Lösungsmitteln löslichen Oxylsäurediamid-Derivates der allgemeinen Formel

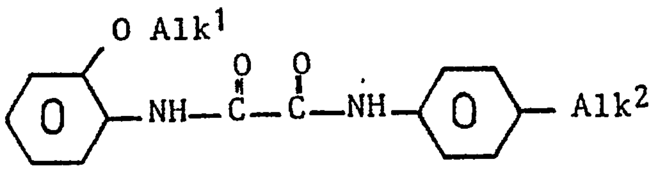

wobei $Alk^1$ eine Alkylgruppe mit 1 bis 3 Kohlenstoffatomen und $Alk^2$ eine Alkylgruppe mit mindestens 7 und höchstens 18 Kohlenstoffatomen bedeutet sowie gegebenenfalls Pigmente, Füllstoffe, Hilfsstoffe und Trockenstoffe zugegeben werden.

8. Verfahren zur Herstellung des Überzugsmittels nach Anspruch 2, dadurch gekennzeichnet, daß

A) 50 bis 70 Gew.% natürliche, linolsäurereiche, trocknende Öle und/oder deren Fettsäuren, die gegebenenfalls vorhandenen gesättigten cycloaliphatischen Di- und/oder Polycarbonsäuren der Komponente B), wobei als Komponente

B) 15 bis 30 Gew.% gesättigte cycloaliphatische Di- und/oder Polycarbonsäuren und/oder gesättigte, aliphatische Di- und/oder Polyisocyanate eingesetzt werden, und

C) 15 bis 25 Gew.% aliphatische Di- und/oder Polyole mit 3–8 Hydroxylgruppen pro Molekül,

wobei die Summe A), B) und C) 100 Gew.% beträgt, in der Schmelze oder in organischem Lösungsmittel bei Temperaturen von 200°C bis 260°C miteinander umgesetzt werden, wobei bei der Verwendung von natürlichen, linolsäurereichen Ölen diese zunächst gegebenenfalls unter Verwendung von Katalysatoren mit einem Teil der Komponente C) zu Mono- und Diesteralkoholen umgesetzt werden, gegebenenfalls noch organisches Lösungsmittel zugefügt wird, anschließend bei 60°C bis 140°C die Umsetzung mit den aliphatischen Di- und/oder Polyisocyanaten der Komponente B) gegebenenfalls unter Verwendung eines Katalysators erfolgt und der Bindemittellösung 0,5 bis 5 Gew.%, bezogen auf das Alkydharz, eines in aliphatischen Lösungsmitteln löslichen Oxalsäurediamid-Derivates der allgemeinen Formel

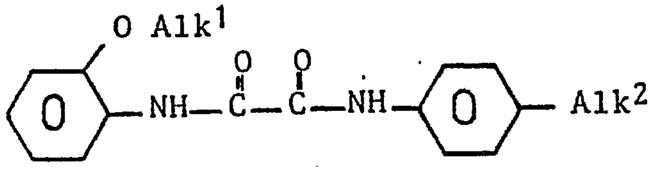

wobei $Alk^1$ eine Alkylgruppe mit 1 bis 3 Kohlenstoffatomen und $Alk^2$ eine Alkylgruppe mit mindestens 7 und höchstens 18 Kohlenstoffatomen bedeutet, sowie gegebenenfalls Pigmente, Füllstoffe, Hilfsstoffe und Trockenstoffe zugegeben werden.

9. Verfahren nach Anspruch 7 oder 8, dadurch gekennzeichnet, daß bis zu 10 Gew.-% der Komponente B) durch aromatische Di- und/oder Polycarbonsäuren ersetzt sind.

10. Verfahren nach Anspruch 7, 8 oder 9, dadurch gekennzeichnet daß bis zu 20 Gew.-% der Komponente B) durch gesättigte, offenkettige, aliphatische Di-, Tri- und/ oder Tetracarbonsäuren ersetzt sind.

11. Verfahren nach Anspruch 7, 8, 9 oder 10, dadurch gekennzeichnet, daß der Fettsäurerest der Komponente A konjugierte Doppelbindungen enthält.

12. Verfahren nach Anspruch 7, 8, 9, 10 oder 11, dadurch gekennzeichnet, daß das Oxalsäurediamid-Derivat N-(2-Ethoxyphenyl)-N'-(4-isododecylphenyl)-oxalsäurediamid ($Alk^1$ = $C_2H_5$; $Alk^2$ = $i\text{-}C_{12}H_{25}$) ist.

13. Verwendung der Überzugsmittel nach Anspruch 1 bis 6 als lufttrocknende Holzanstrichmittel.

**Claims**

1. Coating agent for wood, containing, as the binder, medium- to long-oil alkyd resins based on drying fatty acids or drying oils, aliphatic di- and/or polycarboxylic acids and aliphatic di- and/or polyols, an organic solvent, if appropriate pigments, fillers, auxiliaries and drying substances and a light stabilizer, characterized in that the air-drying alkyd resin is obtainable from

A) 50 to 70% by weight of naturally occurring drying oils, which are rich in linoleic acid, and/or fatty acids thereof,

B) 15 to 30% by weight of saturated cycloaliphatic di- and/or polycarboxylic acids and

C) 15 to 25% by weight of aliphatic di- and/or polyols having 3–8 hydroxyl groups per molecule,

the sum of A), B) and C) being 100% by weight, and the coating agent contains 0.5 to 5% by weight, based on the alkyd resin, of an oxalic acid diamide derivative which is soluble in aliphatic solvents and has the general formula

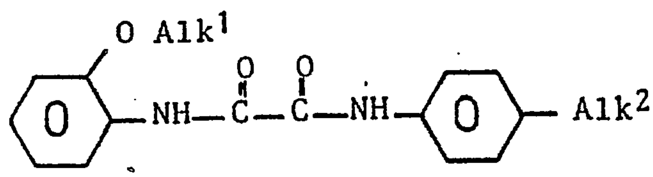

wherein $Alk^1$ denotes an alkyl group having 1 to 3 carbon atoms and $Alk^2$ denotes an alkyl group having at least 7 and not more than 18 carbon atoms.

2. Coating agent according to claim 1, characterized in that all or some of the saturated cycloaliphatic di- and/or polycarboxylic acids of component B) are replaced by aliphatic di- and/or polyisocyanates.

3. Coating agent according to claim 1 or 2, characterized in that up to 10% by weight of component B) is replaced by aromatic di- and/or polycarboxylic acids.

4. Coating agent according to claim 1, 2 or 3, characterized in that up to 20% by weight of component B) is replaced by saturated open-chain aliphatic di-, tri- and/or tetracarboxylic acids.

5. Coating agent according to claim 1, 2, 3 or 4, characterized in that the fatty acid radical of component A) contains conjugated double bonds.

6. Coating agent according to claim 1, 2, 3, 4 or 5, characterized in that the oxalic acid diamide derivative is N-(2-ethoxyphenyl)-N'-(4-isododecylphenyl)-oxalic acid diamide ($Alk^1 = C_2H_5$; $Alk^2 = i\text{-}C_{12}H_{25}$).

7. Process for the preparation of the coating agent according to claim 1, characterized in that

A) 50 to 70% by weight of naturally occurring drying oils, which are rich in linoleic acid, and/or fatty acids thereof,

B) 15 to 30% by weight of saturated cycloaliphatic di- and/or polycarboxylic acids and

C) 15 to 25% by weight of aliphatic di- and/or polyols having 3–8 hydroxyl groups per molecule,

the sum of A), B) and C) being 100% by weight, are reacted with one another in the melt or in an organic solvent at temperatures of 200°C to 260°C, wherein, if naturally occurring oils which are rich in linoleic acid are used, these are first reacted, if appropriate using catalysts, with some of component C) to give mono- and diester-alcohols, the alkyd resin formed from components A), B) and C) is dissolved in an aliphatic solvent, if appropriate with small aromatic contents, and 0.5 to 5% by weight, based on the alkyd

resin, of an oxylic (sic) acid diamide derivative which is soluble in aliphatic solvents and has the general formula

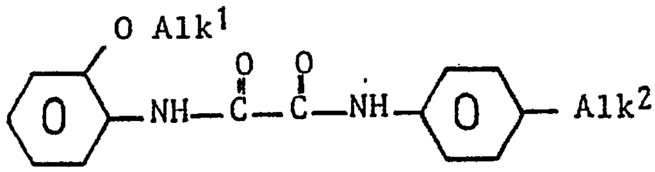

wherein $Alk^1$ denotes an alkyl group having 1 to 3 carbon atoms and $Alk^2$ denotes an alkyl group having at least 7 and not more than 18 carbon atoms, and if appropriate pigments, fillers, auxiliaries and drying substances are added to the binder solution.

8. Process for the preparation of the coating agent according to claim 9, characterized in that

A) 50 to 70% by weight of naturally occurring drying oils, which are rich in linoleic acid, and/or fatty acids thereof, the saturated, cycloaliphatic di- and/or polycarboxylic acids, which are present if appropriate, of component B), as component

B) 15 to 30% by weight of saturated cycloaliphatic di- and/or polycarboxylic acids and/or saturated aliphatic di- and/or polyisocyanates being employed, and

C) 15 to 25% by weight of aliphatic di- and/or polyols having 3–8 hydroxyl groups per molecule,

the sum of A), B) and C) being 100% by weight, are reacted with one another in the melt or in an organic solvent at temperatures of 200°C to 260°C, wherein, if naturally occurring oils which are rich in linoleic acid are used, these are first reacted with some of component C), if appropriate using catalysts, to give mono- and diester-alcohols, further organic solvent is added if appropriate, the reaction with the aliphatic di- and/or polyisocyanates of component B) is then carried out at 60°C to 140°C, if appropriate using a catalyst, and 0.5 to 5% by weight, based on the alkyd resin, of an oxalic acid diamide derivative which is soluble in aliphatic solvents and has the general formula

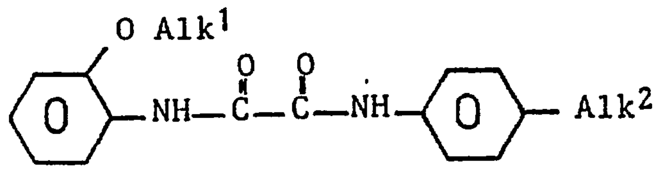

wherein $Alk^1$ denotes an alkyl group having 1 to 3 carbon atoms and $Alk^2$ denotes an alkyl group having at least 7 and not more than 18 carbon atoms, and if appropriate pigments, fillers, auxiliaries and drying substances are added to the binder solution.

9. Process according to claim 7 or 8, characterized in that up to 10% by weight of component B) is replaced by aromatic di- and/or polycarboxylic acids.

10. Process according to claim 7, 8, or 9, characterized in that up to 20% by weight of component B) is replaced by saturated open-chain aliphatic di-, tri- and/or tetracarboxylic acids.

11. Process according to claim 7, 8, 9 or 10, characterized in that the fatty acid radical of component A contains conjugated double bonds.

12. Process according to claim 7, 8, 9, 10 or 11, characterized in that the oxalic acid diamide derivative is N-(2-ethoxyphenyl)-N'-(4-isododecylphenyl)-oxalic acid diamide ($Alk^1 = C_2H_5$; $Alk^2 = i{-}C_{12}H_{25}$).

13. Use of the coating agent according to claim 1 to 6 as air-drying wood paints.

## Revendications

1. Agent de revêtement pour le bois, renfermant, comme liant, des résines alkydes moyennes à longues en huile à base d'acides gras siccatifs ou d'huiles siccatives, d'acides di- et/ou polycarboxyliques aliphatiques et de di- et/ou polyols aliphatiques, du solvant organique, le cas échéant, des pigments, des charges, des adjuvants et des agents siccatifs, de même qu'un agent de protection vis-à-vis de la lumière, caractérisé par le fait que la résine alkyde séchant à l'air peut être obtenue à partir de:

A) 50 à 70% en poids d'huiles siccatives, riches en acide linoléique, naturelles et/ou leurs acides gras,

B) 15 à 30% en poids d'acides di- et/ou polycarboxyliques cycloaliphatiques saturés, et

C) 15 à 25% en poids de di- et/ou polyols aliphatiques avec 3–8 groupes hydroxyle par molécule,

où la somme de A), B) et C) s'élève à 100% en poids, et l'agent de revêtement renferme 0,5 à 5% en poids, par rapport à la résine alkyde, d'un dérivé de diamide d'acide oxalique, soluble dans les solvants aliphatiques, de formule générale:

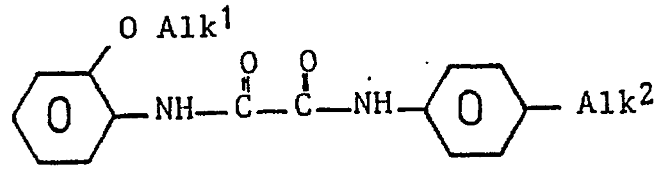

où
– $Alk^1$ signifie un groupe alkyle ayant 1 à 3 atomes de carbone; et
– $Alk^2$ signifie un groupe alkyle ayant au moins 7 et au plus 18 atomes de carbone.

2. Agent de revêtement selon la revendication 1, caractérisé par le fait que les acides di- et/ou polycarboxyliques cycloaliphatiques saturés du composant B) sont remplacés en totalité ou en partie par des di- et/ou polyisocyanates aliphatiques.

3. Agent de revêtement selon l'une des revendications 1 ou 2, caractérisé par le fait que jusqu'à 10% en poids du composant B) sont remplacés par des acides di- et/ou polycarboxyliques aromatiques.

4. Agent de revêtement selon l'une des revendications 1, 2 ou 3, caractérisé par le fait que jusqu'à 20% en poids du composant B) sont remplacés par des acides di-, tri- et/ou tétracarboxyliques aliphatiques, à chaîne ouverte, saturés.

5. Agent de revêtement selon l'une des revendications 1, 2, 3 ou 4, caractérisé par le fait que le reste acide gras du composant A) renferme des doubles liaisons conjuguées.

6. Agent de revêtement selon l'une des revendications 1, 2, 3, 4 ou 5, caractérisé par le fait que le dérivé de diamide d'acide oxalique est le diamide d'acide N-(éthoxy-2 phényl)-N'-(isododécyl-4 phényl)-oxalique ($Alk^1 = C_2H_5$; $Alk^2 = i\text{–}C_{12}H_{25}$).

7. Procédé de fabrication de l'agent de revêtement tel que défini la revendication 1, caractérisé par le fait que l'on fait réagir ensemble, à des températures de 200°C à 260°C, dans la masse en fusion ou dans un solvant organique,

A) 50 à 70% en poids d'huiles siccatives, riches en acide linoléique, naturelles et/ou leurs acides gras,

B) 15 à 30% en poids d'acides di- et/ou polycarboxyliques cycloaliphatiques saturés, et

C) 15 à 25% en poids de di- et/ou polyols aliphatiques ayant 3–8 groupes hydroxyle par molécule,

où la somme de A), B) et c) s'élève à 100% en poids, où, lors de l'utilisation d'huiles naturelles, riches en acide linoléique, on fait réagir celles-ci en premier lieu, le cas échéant, avec utilisation de catalyseurs, avec une partie du composant C) pour obtenir des mono- et diesteralcools, on dissout la résine alkyde formée à partir des composants A), B) et C) dans un solvant aliphatique éventuellement avec de petites fractions de composés aromatiques, et, à la solution de liant, on ajoute 0,5 à 5% en poids, par rapport à la résine alkyde, d'un dérivé de diamide d'acide oxalique soluble dans les solvants aliphatiques, de formule générale:

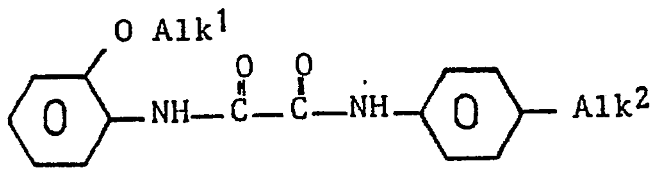

où:
– $Alk^1$ signifie un groupe alkyle ayant 1 à 3 atomes de carbone; et
– $Alk^2$ signifie un groupe alkyle ayant au moins 7 et au plus 18 atomes de carbone, de même que, le cas échéant, des pigments, des charges, des adjuvants et des agents siccatifs.

8. Procédé de fabrication de l'agent de revêtement tel que défini à la revendication 2, caractérisé par le fait que l'on fait réagir ensemble, à des températures de 200°C à 260°C, dans la masse en fusion ou dans un solvant organique,

A) 50 à 70% en poids d'huiles siccatives, riches en acide linoléïque, naturelles et/ou leurs acides gras, les acides di- et/ou polycarboxyliques cycloaliphatiques saturés éventuellement présents du composant B), où comme composant

B) sont utilisées 15 à 30% en poids d'acides di- et/ou polycarboxyliques cycloaliphatiques saturés, et/ou de di- et/ou polyisocyanates aliphatiques, saturés, et

C) 15 à 25% en poids de di- et/ou polyols aliphatiques ayant 3–8 groupes hydroxyle par molécule,

où la somme de A), B) et C) s'élève à 100% en poids, où, lors de l'utilisation d'huiles naturelles, riches en acide linoléique, on fait réagir celles-ci en premier lieu, le cas échéant, avec utilisation de catalyseurs, avec une partie du composant C) pour obtenir des mono- et diesteralcools, on ajoute le cas échéant encore du solvant organique, puis à une température de 60°C à 140°C, a lieu la réaction avec les di- et/ou polyisocyanates aliphatiques du composant B), le cas échéant avec utilisation d'un catalyseur, et à la solution de liant, on ajoute 0,5 à 5% en poids, par rapport à la résine alkyde, d'un dérivé de diamide d'acide oxalique soluble dans les solvants aliphatiques, de formule générale:

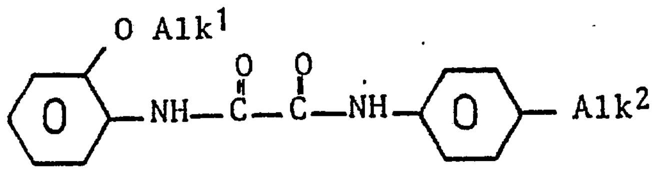

où:
– $Alk^1$ signifie un groupe alkyle ayant 1 à 3 atomes de carbone; et
– $Alk^2$ signifie un groupe alkyle ayant au moins 7 et au plus 18 atomes de carbone, de même que, le cas échéant, des pigments, des charges, des adjuvants et des agents siccatifs.

9. Procédé selon l'une des revendications 7 ou 8, caractérisé par le fait que jusqu'à 10% en poids du composant B) sont remplacés par des acides di- et/ou polycarboxyliques aromatiques.

10. Procédé selon l'une des revendications 7, 8 ou 9, caractérisé par le fait que jusqu'à 20% en poids du composant B) sont remplacés par des acides di-, tri- et/ou tétracarboxyliques aliphatiques, à chaîne ouverte, saturés.

11. Procédé selon l'une des revendications 7, 8, 9 ou 10, caractérisé par le fait que le reste acide gras du composant A) renferme des doubles liaisons conjuguées.

12. Procédé selon l'une des revendications 7, 8, 9, 10 ou 11, caractérisé par le fait que le dérivé de diamide d'acide oxalique est le diamide d'acide N-(éthoxy-2 phényl)-N'-(isododécyl-4 phényl)-oxalique ($Alk^1 = C_2H_5$; $Alk^2 = i\text{–}C_{12}H_{25}$).

13. Utilisation de l'agent de revêtement tel que défini à l'une des revendications 1 à 6 comme agent de revêtement du bois séchant à l'air.